# FASCICULE DE BREVET EUROPEEN

(11) **EP 0 555 455 B1**
(45) Date de publication et mention de la délivrance du brevet: **12.04.1995**
(21) Numéro de dépôt: 92918768.0
(22) Date de dépôt: 25.08.1992
(51) Int. Cl.: B23K 11/25, B23K 11/11, H01R 39/32

(54) **PROCEDE DE MESURE DE LA TEMPERATURE DE LA ZONE DE SERTISSAGE OU DE SOUDAGE LORS D'UNE OPERATION DE SERTISSAGE A CHAUD OU DE SOUDAGE PAR POINTS, ET PROCEDES DE CONTROLE DE PARAMETRES D'OPERATION DE SERTISSAGE ET DE SOUDAGE PAR POINTS**
VERFAHREN ZUM MESSEN DER TEMPERATUR DER KRIMP- ODER SCHWEISSZONE WAEHREND DER DURCHFUEHRUNG EINES WARMKRIMP- ODER EINES PUNKTSCHWEISSVORGANGES
METHOD FOR MEASURING THE TEMPERATURE OF THE CRIMPING OR WELDING AREA DURING A HEAT CRIMPING OR SPOT WELDING OPERATION, AND METHODS FOR CONTROLLING THE PARAMETERS OF CRIMPING AND SPOT WELDING OPERATIONS

(30) Priorité: 30.08.1991 FR 9110901; 18.11.1991 FR 9114371
(43) Date de publication de la demande: 18.08.1993
(73) Titulaire: Leon, Paul, F-27630 Berthenonville (FR)
(72) Inventeur: Leon, Paul, F-27630 Berthenonville (FR)
(74) Mandataire: Le Guen, Louis François
(86) Numéro de dépôt international: FR9200818
(87) Numéro de publication internationale: WO9304812

(56) Documents cités:
- WO-A-92/10326
- DE-A- 2 835 750
- GB-A- 1 151 353
- US-A- 3 309 494
- US-A- 3 665 145
- US-A- 4 472 620
- IBM TECHNICAL DISCLOSURE BULLETIN vol. 26, no. 8, 1 Janvier 1984, NEW-YORKpages 4108 - 4109 J. KLOEPFER 'method of measuring the circuit boardtemperature during drilling'
- DATABASE WPI Week 7804, Derwent Publications Ltd., London, GB; AN 07634A & JP-A-52 149 242 (NAKAMURA) 12 December 1977
- CONTROL ENGINEERING vol. 23, no. 41, 1 Novembre 1976, NEW YORK US A.J. INTIERI'ir monitor controller assures reliable armature winding connections'

## Description

### Description pour les états contractants : DE, ES, FR, GB, IT

La présente invention concerne un procédé de mesure de la température de la zone sertie ou soudée lors d'une opération de sertissage à chaud ou de soudage par points.

Une telle opération de soudage est effectuée sur une machine de soudage par point qui comprend essentiellement deux électrodes mobiles respectivement reliées aux bornes de sortie d'une source de courant. Pendant l'opération de soudage de deux pièces, on les plaque l'une contre l'autre puis on applique, avec une pression prédéterminée, les extrémités en regard de chaque électrode sur leurs faces externes. On fait alors passer un courant de soudage entre les deux électrodes, lequel traverse l'épaisseur de chaque pièce pour y créer une fusion locale et le point de soudure. Une fois la soudure réalisée, on interrompt le passage du courant et on relâche la pression des électrodes sur les pièces.

Une opération de sertissage à chaud est également effectuée par le passage d'un courant dans la zone à sertir, mais l'intensité est inférieure à celle qui permettrait le soudage. Un exemple en est donné dans les documents FR-A-2 510 827 et FR-A-2 511 200 dans l'application particulière de sertissage de collecteurs de moteurs électriques.

Dans le document FR-A-2 510 827, on peut voir un collecteur formé d'une pluralité de segments montés à la périphérie d'un cylindre et constitués, chacun, d'une lame dirigée axialement et prolongée d'une languette formant un coude. Chaque fil électrique issu de l'induit monté sur le rotor passe ou est enroulé à l'intérieur du coude du segment correspondant. Une électrode exerce une force verticale sur la languette du segment pour la replier sur la lame tout en enserrant le fil électrique. On applique entre cette électrode et le segment correspondant un courant suffisamment élevé pour entraîner une élévation de température permettant, d'une part, la destruction, à l'endroit du sertissage, d'un vernis isolant recouvrant le fil de l'induit et, d'autre part, le sertissage du fil sur le segment.

Le document "Control Engineering" décrit également un procédé de sertissage à chaud qui utilise un détecteur à infrarouge combiné avec des fibres optiques.

Différents paramètres interviennent dans l'exécution des opérations mentionnées ci-dessus: l'intensité du courant de soudage, la durée de l'opération, la pression de la ou des électrodes sur les pièces à souder, etc.

Il est possible de modifier et donc de contrôler ces paramètres en cours d'une même opération de sertissage ou de soudage. La température atteinte dans la zone sertie ou soudée est un élément déterminant de l'opération en cours. Aussi, pour rendre le contrôle de l'opération efficace, on a cherché à mettre en oeuvre des moyens qui permettraient de mesurer directement la température de la zone sertie ou soudée et qui délivreraient au moins un signal fonction de la température de cette zone.

On connaît de tels moyens. Par exemple, dans les documents de brevet JP-A-52149242 et US-A-4 472 620, ils consistent en des capteurs thermoélectriques montés sur une des électrodes d'une machine à souder par point. Un autre moyen connu consiste en l'utilisation d'une fibre optique dont une extrémité pointe, a très faible distance, sur la zone de mesure. L'intensité de rayonnements infrarouges émis par l'opération de sertissage ou de soudage et traversant la fibre constitue un signal de température.

Or, ces moyens posent divers problèmes. Soit, ils sont trop éloignés de la zone de mesure et introduisent alors un retard significatif, soit ils sont très près de cette zone et ils gênent pour la mise en place des pièces à sertir ou souder et pour celle des électrodes. Par ailleurs, le signal de mesure est perturbé par des phénomènes extérieurs à la soudure, tels que des projections de soudure, l'usure des électrodes, etc.

Le document de brevet WO-A-92/10326, qui appartient à l'état de la technique visé à l'article 54(3)CBE, a déjà tenté de remédier à ces inconvénients en proposant d'utiliser comme signal de mesure l'un des signaux thermoélectriques respectivement engendrés entre l'une ou l'autre pièce à souder et l'électrode avec laquelle elles sont en contact, et/ou entre les pièces elles mêmes.

Un tel procédé de mesure nécessite une connection entre les différentes pièces qui engendrent le signal, imposant ainsi un certain temps entre chaque mesure.

L'invention propose un procédé de contrôle de paramètres d'une opération de soudage effectuée par une machine à soudure par point qui ne présente pas les inconvénients mentionnés ci-dessus.

Ainsi, l'invention concerne un procédé de contrôle de tels paramètres, tel que défini à la revendication 1, qui est remarquable en ce qu'un signal électrique de mesure de température est prélevé aux bornes de deux électrodes d'une machine à souder par point, et en ce qu'on prévoit des moyens pour que ledit signal soit un signal thermoélectrique.

Pour ce faire, on utilise comme signal de mesure le signal thermoélectrique engendré entre les deux électrodes, une électrode étant dans un matériau tel qu'il soit un des éléments d'un couple thermoélectrique dont le second élément est le matériau de l'autre électrode.

Selon une autre caractéristique de l'invention, une des électrodes est en un alliage de cupronickel, et l'autre électrode est en cuivre.

Avantageusement, ladite électrode est en un alliage de cupronickel, ledit alliage contenant moins de 20% de nickel.

Selon une autre mode de réalisation, défini à la revendication 4, une des électrodes est munie d'un insert venant au moment de l'opération de soudage en contact avec l'une des pièces à souder, ledit insert étant constitué dans un matériau tel qu'il soit un des éléments d'un couple thermoélectrique dont le second élément est le matériau de l'autre électrode, ledit signal étant délivré aux bornes, d'une part, de l'insert et, d'autre part, de l'autre électrode.

Ledit insert peut par exemple être constitué d'un conducteur qui traverse longitudinalement ladite électrode et dont l'extrémité qui affleure la surface de l'extrémité de ladite électrode peut venir en contact avec la pièce à souder adjacente en même temps que ladite électrode.

Ledit insert peut aussi consister en une pastille montée à l'extrémité de ladite électrode.

Avantageusement, ledit insert est en un alliage de cupronickel.

Le signal de mesure est alors engendré directement dans la zone de soudage. Il n'est donc pas affecté de perturbations engendrées par des phénomènes extérieurs à cette zone et n'acquiert pas de retard significatif par rapport à la variation de température.

Le signal a une valeur en tension qui est représentative de la température de la zone de soudage. Il peut donc servir à piloter une unité qui peut commander alors, en temps réel, les différents paramètres de l'opération de soudage.

Par exemple, une telle unité peut commander l'arrêt du passage du courant de soudage lorsque, au vu du ou des signaux de mesure de température, une température de soudage prédéterminée est atteinte.

Elle peut également asservir le courant de soudage pour que l'évolution du signal de mesure corresponde à une fonction prédéterminée.

Dans la présente description, lorsqu'on désigne un couple de métaux comme présentant un pouvoir thermoélectrique, cela signifie que ce couple peut engendrer un signal de température mesurable, c'est-à-dire dont la valeur en tension est au minimum de l'ordre du millivolt, valeur qui en réalité dépend de l'électronique de détection.

Précisons que la température de la zone de soudage est de l'ordre de 1500° C, voire, dans certains cas, plus, et que le nombre de couples de matériaux qui, à cette température, répondent à la condition mentionnée ci-dessus est relativement important.

L'invention concerne également une application du procédé de mesure précédemment décrit au sertissage d'un fil électrique sur un segment conducteur de moteur électrique. En général, les segments de collecteur d'un moteur électrique sont montés à la périphérie d'un cylindre en matière isolante lui-même monté axialement sur l'arbre du moteur. Or, afin que l'opération de sertissage à chaud n'entraîne pas une déformation du cylindre, ce qui porterait atteinte à la précision dimensionnelle du collecteur et par conséquent au bon fonctionnement du moteur, on utilise des matériaux résistants à la haute température atteinte durant le sertissage. C'est ainsi qu'on a été amené à utiliser des matières plastiques chargées.

Ces matériaux sont néanmoins coûteux et peuvent, de plus, être polluants. Aussi, préfère-t-on utiliser d'autres matériaux moins onéreux et moins polluants et rechercher une solution au problème de la tenue en température du cylindre porteur des segments en passant par le contrôle de la température du segment et, en particulier, de la température à l'endroit du sertissage.

Un procédé selon l'invention, tel que défini à la revendication 8, est remarquable en ce qu'on utilise comme signal de mesure de température le signal thermoélectrique engendré entre l'électrode de sertissage et le segment avec lequel elle est en contact.

Ce signal de mesure a une valeur qui est proportionnelle à la température dans la zone de sertissage. Il est alors possible de contrôler la température de la zone afin de la réguler et qu'elle ne dépasse pas une température critique donnée.

De ce fait, il est également possible d'utiliser, pour le cylindre porteur des segments, un matériau de moins bonne tenue thermique et donc moins onéreux que ceux jusque là utilisés.

Selon un mode de réalisation préféré, l'électrode de sertissage est pourvue de moyens engendrant à l'interface avec le segment un signal thermoélectrique.

Ces moyens peuvent consister à prévoir une électrode dans un matériau tel qu'elle soit un des éléments d'un couple thermoélectrique dont l'autre élément est le segment à sertir.

Ils peuvent également consister en une pastille brasée à l'extrémité de ladite électrode et dans un matériau tel que ladite pastille soit un des élément d'un couple thermoélectrique dont l'autre élément est le segment à sertir.

Selon un autre mode de réalisation, l'extrémité libre de l'électrode comporte une pluralité de logements dans lesquels sont noyés des filaments dans un matériau tel que chacun desdits filaments forme un des élément d'un couple thermoélectrique dont l'autre élément est le segment à sertir.

Selon un autre mode de réalisation, ladite électrode est en cupronickel.

Les caractéristiques de l'invention mentionnées ci-dessus, ainsi que d'autres, apparaîtront plus clairement à la lecture de la description suivante d'exemples de réalisation de deux applications particulières, ladite description étant faite en relation avec les dessins joints, parmi lesquels:
les Figs. 1 à 3 sont respectivement des vues schématiques de machines à souder par point dans des premier, second et troisième modes de réalisation,
la Fig. 4 est une vue schématique d'une machine à souder par point comportant une unité de commande, cette vue illustrant un mode de fonctionnement possible de ladite unité de commande,
la Fig. 5 est une vue en coupe selon un plan radial d'un collecteur de moteur électrique,
la Fig. 6 est une vue illustrant la mise en oeuvre du procédé de sertissage selon l'invention, et
la Fig. 7 est une vue en coupe d'un mode de réalisation d'une électrode qui peut être utilisée pour la mise en oeuvre du procédé selon l'invention.

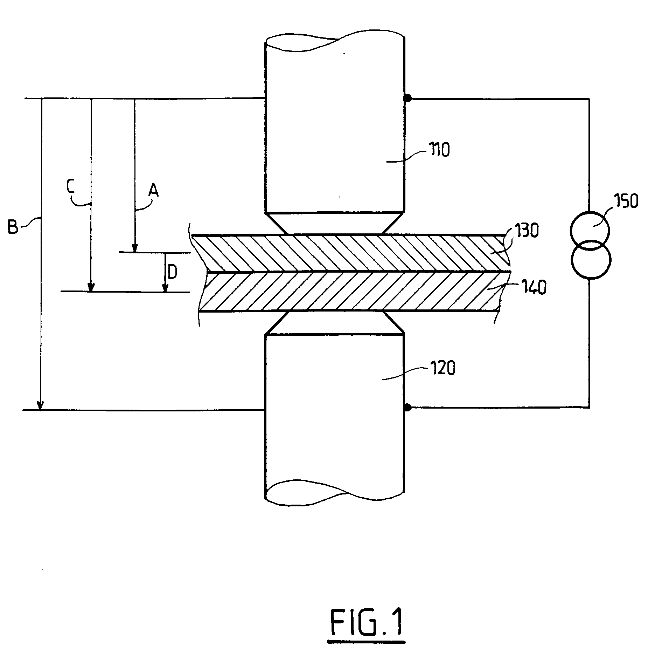

A la Fig. 1, on voit une première électrode 110 et une seconde électrode 120 d'une machine à souder par point. Les électrodes 110 et 120 sont représentées avec les extrémités respectivement en appui sur les faces externes de deux pièces à souder 130 et 140.

Les deux électrodes 110 et 120 sont respectivement reliées aux bornes d'une source de courant 150 destinée à délivrer le courant de soudage. Ce courant est ainsi prévu pour traverser chacune des pièces 130 et 140 dans une zone comprise entre les deux électrodes 110 et 120 afin de créer, dans cette zone, une fusion des pièces 130 et 140 qui assure leur soudage.

Selon un premier mode de réalisation de l'invention, l'électrode 110 est constituée dans un matériau tel qu'elle soit un des éléments d'un couple thermoélectrique dont le second élément est l'autre électrode 120.

Par exemple, si une des pièces à souder 130 ou 140 est en acier, on peut prévoir une électrode 110 en un alliage de cupronickel, l'autre électrode 120 pouvant être en cuivre. Le signal de température est prélevé entre l'électrode 110 en cupronickel et l'électrode 120 en cuivre, comme le montre la flèche B de la Fig. 1.

L'alliage de cupronickel de l'électrode 110 est tel que son pouvoir thermoélectrique avec une des pièces à souder 130 ou 140 soit suffisamment important pour être mesuré, ce qui implique qu'il présente une teneur en nickel relativement élevée. Mais, compte tenu de la forte intensité du courant de soudage et pour éviter des pertes en chaleur trop importantes, l'électrode 110 doit présenter une faible résistivité. La teneur en nickel ne peut donc pas être trop élevée. En conséquence, cet alliage de cupronickel contient avantageusement moins de 20% de nickel, voire moins de 10%. Des essais ont montré qu'une teneur de 2% donne de bons résultats, c'est-à-dire que les pertes par effet Joule sont faibles et que le signal de température présente une valeur encore suffisamment élevée pour pouvoir être mesurée.

L'invention ne se limite pas aux matériaux mentionnés ci-dessus qui le sont seulement à titre explicatif mais englobe également les matériaux qui remplissent les fonctions de ceux-ci.

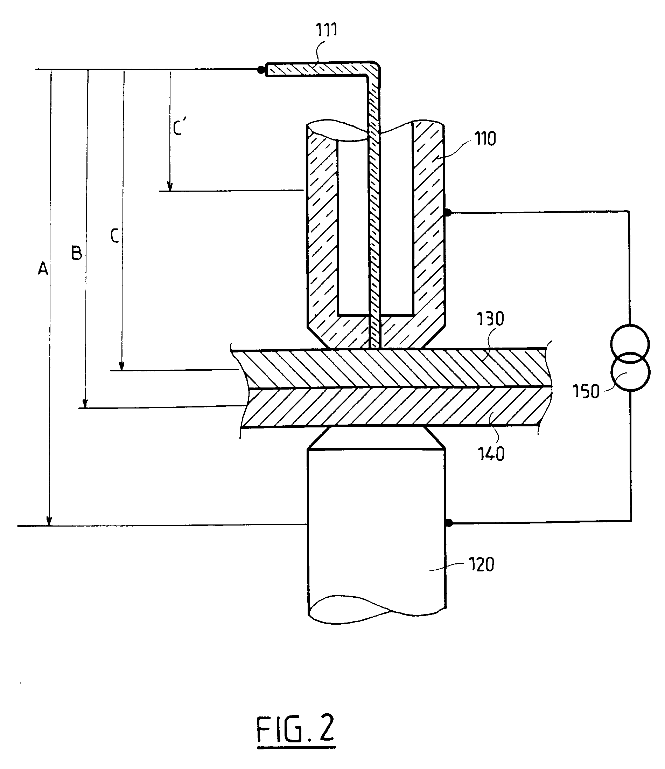

La Fig. 2 représente un second mode de réalisation. Dans ce mode particulier, une électrode 110 est traversée longitudinalement par un conducteur 111 dont l'extrémité affleure à la surface de l'extrémité de l'électrode 110 si bien que, lorsque cette dernière est en appui sur la pièce 130, l'extrémité du conducteur 111 est en contact avec ladite pièce 130. Le conducteur 111 est constitué dans un matériau qui présente un pouvoir thermoélectrique mesurable avec une des pièces à souder 130 ou 140 ou avec l'électrode 120.

Le signal de mesure de la température de soudage est prélevé entre, d'une part, le conducteur 111 et, d'autre part, l'autre électrode 120 (flèche A).

Le matériau qui constitue le conducteur 111 est, par exemple, un alliage de cupronickel, comme du constantan.

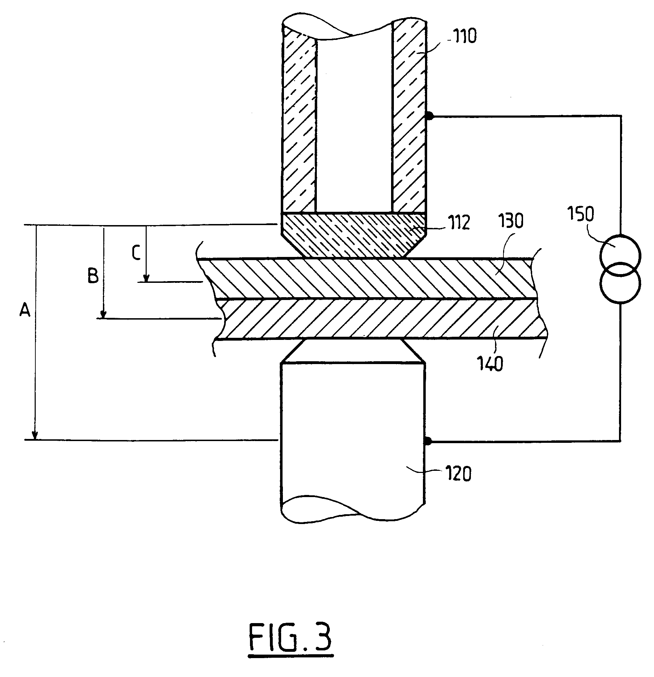

La Fig. 3 montre un autre mode de réalisation où une pastille 112 de relativement faible épaisseur est fixée à l'extrémité de l'électrode 110. La pastille 112 est dans un matériau tel qu'elle présente, avec une des pièces à souder 130 ou 140, un pouvoir thermoélectrique mesurable. Le signal de mesure de la température de soudage est prélevé entre, d'une part, la pastille 112 et, d'autre part, l'autre électrode 120 (flèche A).

On notera que si la pastille 112 est de faible épaisseur, elle peut présenter une grande résistivité sans que les pertes par effet Joule soient élevées. De ce fait, il est possible de choisir un matériau présentant une fort pouvoir thermoélectrique comme, par exemple, un alliage de cupronickel à relativement fort pourcentage en nickel comme le constantan.

Les moyens mis en oeuvre représentés aux Figs. 2 et 3 sont en réalité des inserts prévus pour venir en contact avec une des pièces à souder (ici 130). On comprendra que d'autres formes d'insert ayant une fonction équivalente à ceux décrits entrent dans le cadre de la présente invention.

L'homme du métier ayant pris connaissance de l'enseignement contenu dans la présente description peut mettre en oeuvre un procédé selon l'invention où l'on contrôle les paramètres de soudage en fonction de plus d'un signal de température.

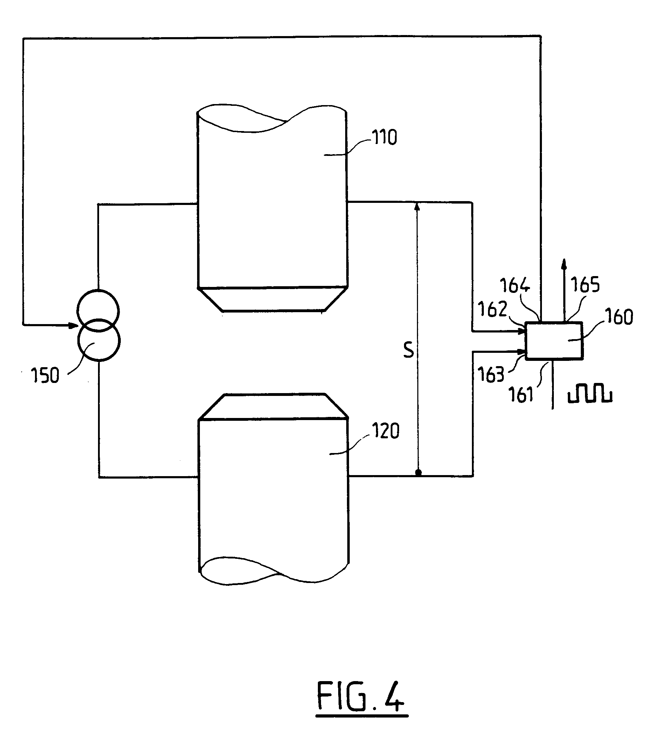

La Fig. 4 montre schématiquement une machine à souder par point avec ses deux électrodes 110 et 120 et une source de courant 150 dont les bornes sont respectivement reliées aux électrodes 110 et 120. Le signal de mesure de température S est délivré ici aux bornes des deux électrodes 110 et 120.

La machine représentée comporte encore une unité de commande 160. Celle-ci possède une entrée 161 sur laquelle est appliqué un signal d'horloge. Elle possède également deux entrées 162 et 163 auxquelles sont respectivement fournies le signal de mesure de température S.

L'unité 160 possède également une sortie 164 pour piloter la source de courant 150 et une autre sortie 165 pour contrôler d'autres paramètres de la machine.

Le fonctionnement de l'unité 160 peut être le suivant. Elle commande d'abord la source de courant 150 pour que celle-ci applique un courant d'intensité prédéterminée entre les deux électrodes 110 et 120. Par ailleurs, elle attribue une valeur à chacun des paramètres de la machine. Puis elle coupe la source de courant 150 et effectue alors la lecture du signal de mesure de température. Enfin, elle déduit de l'évaluation de la température ainsi faite les nouvelles valeurs des paramètres de la machine ainsi que la nouvelle valeur de l'intensité de courant qu'elle attribuera au cycle suivant.

La manière dont l'unité de commande 160 détermine les valeurs des paramètres de l'opération de soudage relève de la compétence de l'homme du métier et n'est donc pas décrite ici plus en détail.

La fonction essentielle de l'unité de commande 160 peut ainsi consister, après la phase de lecture du ou des signaux de température, à commander, si l'évaluation de la température n'a pas atteint une valeur seuil prédéterminée, le passage d'un courant de soudage d'une intensité prédéterminée dans les pièces à souder, c'est-à-dire, en d'autres termes, attribuer cette valeur d'intensité au courant de soudage, ou, si l'évaluation de la température de soudage a atteint cette valeur seuil, l'arrêt du passage du courant de soudage dans les pièces a souder, c'est-à-dire attribuer une valeur nulle à son intensité.

Une autre fonction de l'unité 160 est de réguler l'intensité du courant délivré par la source 150 de manière que l'évolution du signal de température S au cours du temps corresponde à une fonction, au sens mathématique du terme, prédéterminée.

On notera que le temps de réponse de l'unité 160 correspond à une période du signal d'horloge. Avec une fréquence d'horloge de 50 Hz, ils sont de vingt millisecondes, ce qui est suffisant pour une opération de soudage par point. Une précision plus importante peut être obtenue, par exemple, avec une fréquence d'horloge de 1000 Hz.

On comprendra que le fonctionnement de l'unité de commande 160 pourrait être sensiblement le même si plusieurs signaux de température étaient disponibles.

On va maintenant décrire une autre application du procédé de mesure de température selon l'invention, en particulier, dans le domaine du sertissage de segments d'un collecteur de moteur électrique.

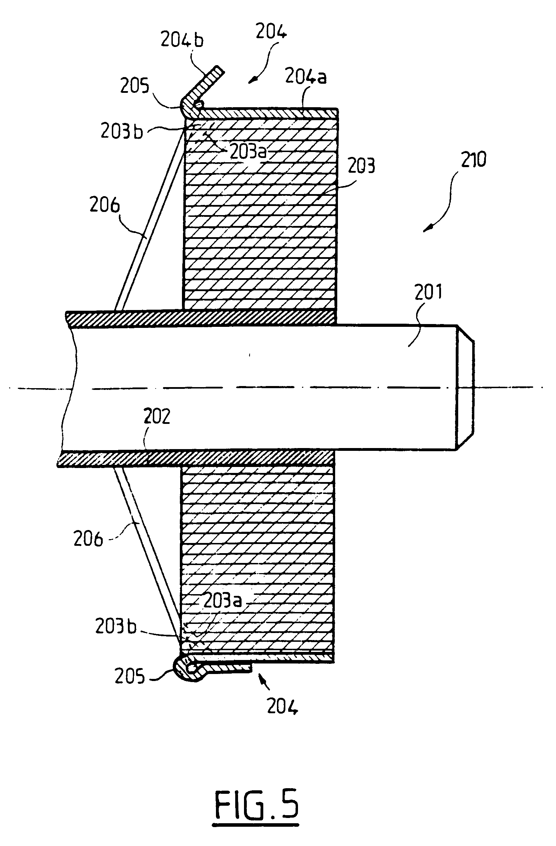

Au préalable, on a représenté, à la Fig. 5, l'extrémité d'un rotor 201 d'un moteur électrique, extrémité prévue pour recevoir un collecteur 210 dudit moteur.

Sur l'arbre 201 d'un moteur, est montée solidaire une bague 202 en matière plastique destinée à recevoir les enroulements de l'induit du rotor (non représenté). Sur la bague 202, est monté solidaire un cylindre isolant 203, réalisé, par exemple, en matière plastique chargée.

A la périphérie du cylindre 203, sont montés solidaires du cylindre 203, et ce de manière connue de l'homme de métier, des segments de collecteur 204 constitués chacun d'une lame 204a dirigée axialement et prolongée, à une extrémité, d'une languette de raccordement coudée 204b. A l'intérieur du coude 205, passe un fil électrique 206 relié aux enroulements de l'induit du moteur. Il pourrait également être enroulé autour de la languette 204b du segment.

Le contact électrique et le montage mécanique du fil sont réalisés par une opération de sertissage à chaud. Au dessus de l'axe de la Fig. 1, on a représenté la languette telle qu'elle se présente avant sertissage à chaud du fil, c'est-à-dire au moment du montage des fils des enroulements de l'induit, tandis qu'au-dessous du même axe, elle est représentée après sertissage.

Notons que chaque segment 204 est avantageusement en un matériau contenant essentiellement du cuivre.

Le cylindre 203 présente un chanfrein 203a côté induit et chaque segment 204 repose sur un talon 203b.

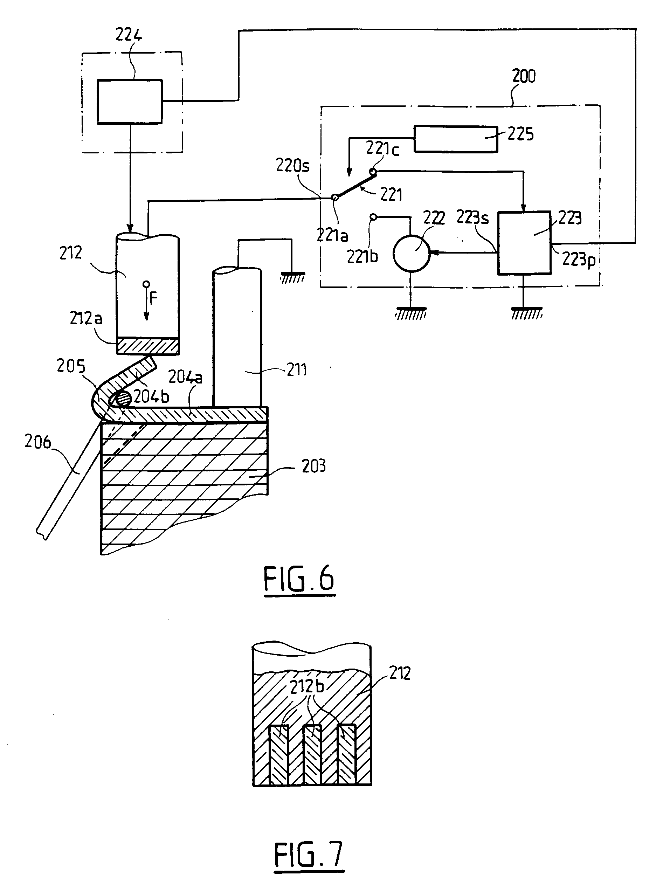

La Fig. 6 montre schématiquement une machine pour réaliser une opération de sertissage selon l'invention. On voit une première électrode 211 qui repose avec contact électrique sur la lame 204a d'un segment 204. Une seconde électrode 212 susceptible de se déplacer verticalement est en appui sur l'extrémité libre de la languette 204b et est prévue pour exercer une force verticale F sur la languette 204b afin que celle-ci se replie vers la lame 204a tout en enserrant le fil électrique 206 à l'intérieur du coude 205.

La seconde électrode 212 est constituée d'un barre verticale métallique, par exemple en molybdène, à l'extrémité libre de laquelle on a monté, par exemple par brasage, une pastille 212a dans un alliage de cupronickel.

Par ce moyen, au contact, au moment du sertissage, entre la seconde électrode 212 dont l'extrémité 212a est en cupronickel et l'extrémité de la languette 204b en cuivre, on a créé un thermocouple engendrant une tension qui est proportionnelle à la température qui règne dans la zone de sertissage.

Selon le mode de réalisation représenté, la première électrode 211 est reliée électriquement à la masse alors que la seconde électrode 212 est reliée à la sortie 220s d'une unité de commande 220. Dans l'exemple de réalisation représenté, celle-ci est constituée d'un commutateur 221 dont le point commun 221a est relié à la sortie 220s de l'unité 220, dont un point commuté 221b est relié à une source de tension ou de courant 222 alors que l'autre point commuté 221c est relié à l'entrée d'une unité de contrôle 223. Celle-ci est reliée à la masse et comporte, d'une part, une sortie 223s reliée à une entrée de contrôle de la source 222 et, d'autre part, une sortie 223p reliée à l'entrée d'une unité de commande 224 de la force qu'exerce la seconde électrode 212 sur la languette 204b.

L'unité de contrôle 223 peut être, par exemple, du type à boucle d'asservissement, analogique ou numérique, avec ou sans microprocesseur.

Le commutateur 221 est commandé par une base de temps 225 pour qu'il commute alternativement d'une position à l'autre, et ce, par exemple, à une fréquence pouvant être comprise entre 1 et 1000 Hz.

Lorsque le commutateur 221 est commuté vers la source 222 pendant une phase dite d'alimentation, on applique, entre les deux électrodes 211 et 212, une tension créant le passage d'un courant suffisamment intense pour entraîner une élévation de température de la languette 204b et du fil 206. Cette élévation de température ainsi que la force qu'exerce la seconde électrode 212 sur la languette 204a permettent la réalisation du sertissage à chaud du fil 206 et, par conséquent, son maintien mécanique entre la languette 204b et la lame 204a et son contact électrique avec le segment 204.

Le fil 206 peut être recouvert d'une couche de vernis et, dans ce cas, l'élévation de température due au sertissage entraîne sa destruction à l'endroit du sertissage.

Lorsque le commutateur 221 est commuté vers l'unité 223 pendant une phase dite de mesure, la tension engendrée par le thermocouple créé entre la languette en cuivre 204b et la pastille en cupronickel 212a est reçue à l'entrée de l'unité de contrôle 223.

L'unité de contrôle 223 commande alors la source de tension 222 de manière qu'à la phase d'alimentation suivant une phase de mesure, la source 222 commande le chauffage de la languette 204b à une température désirée qui est fonction de la température mesurée pendant la phase de mesure.

Elle commande également l'unité 224 de manière à faire varier l'intensité de la force exercée par l'électrode 212 sur la languette 204b, notamment après affaissement de la languette 204b sur la lame 204a, ceci en fonction de la température mesurée pendant la phase de mesure. Selon la nature du sertissage, en particulier, des matériaux utilisés, de l'intensité du courant de sertissage, des masses des différents éléments intervenants, l'intensité de cette force croît ou décroît après la force initiale.

La description de la structure et celle du fonctionnement de l'unité de commande 220 sont données ici à titre d'exemple et on comprendra que ces structure et fonctionnement pourraient être différents sans sortir, pour cela, du cadre de l'invention.

A la Fig. 7, on a représenté une variante d'exécution de l'électrode 212 selon laquelle son extrémité comporte une pluralité de logements dans lesquels sont respectivement noyés des pastilles ou filaments 212b dans un alliage de cupronickel. Le fonctionnement est semblable au premier mode de réalisation.

### Description pour les états contractants : CH, LI

La présente invention concerne un procédé de mesure de la température de la zone sertie ou soudée lors d'une opération de sertissage à chaud ou de soudage par points.

Une telle opération de soudage est effectuée sur une machine de soudage par point qui comprend essentiellement deux électrodes mobiles respectivement reliées aux bornes de sortie d'une source de courant. Pendant l'opération de soudage de deux pièces, on les plaque l'une contre l'autre puis on applique, avec une pression prédéterminée, les extrémités en regard de chaque électrode sur leurs faces externes. On fait alors passer un courant de soudage entre les deux électrodes, lequel traverse l'épaisseur de chaque pièce pour y créer une fusion locale et le point de soudure. Une fois la soudure réalisée, on interrompt le passage du courant et on relâche la pression des électrodes sur les pièces.

Une opération de sertissage à chaud est également effectuée par le passage d'un courant dans la zone à sertir, mais l'intensité est inférieure à celle qui permettrait le soudage. Un exemple en est donné dans les documents FR-A-2 510 827 et FR-A-2 511 200 dans l'application particulière de sertissage de collecteurs de moteurs électriques.

Dans le document FR-A-2 510 827, on peut voir un collecteur formé d'une pluralité de segments montés à la périphérie d'un cylindre et constitués, chacun, d'une lame dirigée axialement et prolongée d'une languette formant un coude. Chaque fil électrique issu de l'induit monté sur le rotor passe ou est enroulé à l'intérieur du coude du segment correspondant. Une électrode exerce une force verticale sur la languette du segment pour la replier sur la lame tout en enserrant le fil électrique. On applique entre cette électrode et le segment correspondant un courant suffisamment élevé pour entraîner une élévation de température permettant, d'une part, la destruction, à l'endroit du sertissage, d'un vernis isolant recouvrant le fil de l'induit et, d'autre part, le sertissage du fil sur le segment.

Le document "Control Engineering" (vol. 23, no. 41, 1 November 1976, New York, page 79) décrit également un procédé de sertissage à chaud qui utilise un détecteur à infrarouge combiné avec des fibres optiques.

Différents paramètres interviennent dans l'exécution des opérations mentionnées ci-dessus: l'intensité du courant de soudage, la durée de l'opération, la pression de la ou des électrodes sur les pièces à souder, etc.

Il est possible de modifier et donc de contrôler ces paramètres en cours d'une même opération de sertissage ou de soudage. La température atteinte dans la zone sertie ou soudée est un élément déterminant de l'opération en cours. Aussi, pour rendre le contrôle de l'opération efficace, on a cherché à mettre en oeuvre des moyens qui permettraient de mesurer directement la température de la zone sertie ou soudée et qui délivreraient au moins un signal fonction de la température de cette zone.

On connaît de tels moyens. Par exemple, dans les documents de brevet JP-A-52149242 et US-A-4 472 620, ils consistent en des capteurs thermoélectriques montés sur une des électrodes d'une machine à souder par point. Un autre moyen connu consiste en l'utilisation d'une fibre optique dont une extrémité pointe, à très faible distance, sur la zone de mesure. L'intensité de rayonnements infrarouges émis par l'opération de sertissage ou de soudage et traversant la fibre constitue un signal de température.

Or, ces moyens posent divers problèmes. Soit, ils sont trop éloignés de la zone de mesure et introduisent alors un retard significatif, soit ils sont très près de cette zone et ils gênent pour la mise en place des pièces à sertir ou souder et pour celle des électrodes. Par ailleurs, le signal de mesure est perturbé par des phénomènes extérieurs à la soudure, tels que des projections de soudure, l'usure des électrodes, etc.

L'invention propose donc un moyen de mesure de la température de la zone de sertissage ou de soudage, tel que défini à la revendication 1, qui ne présente pas les inconvénients mentionnés ci-dessus.

Pour ce faire, on utilise comme signal de mesure au moins l'un des signaux thermoélectriques respectivement engendrés entre l'une ou l'autre pièce et l'électrode adjacente, et/ou, entre les pièces elles-mêmes.

Le signal de mesure est alors engendré directement dans la zone de sertissage ou de soudage. Il n'est donc pas affecté de perturbations engendrées par des phénomènes extérieurs à cette zone et n'acquiert pas de retard significatif par rapport à la variation de température.

Selon une autre caractéristique de l'invention, on utilise au moins une électrode pourvue de moyens engendrant à l'interface avec la pièce avec laquelle elle est en contact un signal thermoélectrique.

Selon un mode de réalisation, lesdits moyens consistent à prévoir une électrode dans un matériau tel qu'elle soit un des éléments d'un couple thermoélectrique dont l'autre élément est l'une desdites pièces à sertir ou à souder ou l'autre électrode.

Selon un autre mode de réalisation, lesdites moyens consistent en une pastille soudée à l'extrémité de ladite électrode et dans un alliage tel que ladite pastille soit un des éléments d'un couple thermoélectrique dont l'autre élément est l'une desdites pièces à sertir ou à souder ou l'autre électrode.

Selon un autre mode de réalisation, lesdits moyens consistent en une pluralité de filaments noyés dans des logements prévus à l'extrémité de ladite électrode, lesdits filaments étant dans un alliage tel qu'ils soient un des éléments d'un couple thermoélectrique dont l'autre élément est l'une desdites pièces à sertir ou à souder ou l'autre électrode.

L'invention concerne également une application du procédé précédemment décrit au contrôle de paramètres d'une opération de soudage effectuée par une machine à soudure par point.

Ainsi, l'invention concerne un procédé de contrôle de tels paramètres, tel que défini à la revendication 6, qui est remarquable en ce qu'un ou des signaux électriques de mesure de température sont prélevés aux bornes, d'une part, de l'une ou de l'autre électrode d'une machine à souder par point et, d'autre part, de l'une des pièces à souder ou de l'autre électrode, et en ce qu'on prévoit des moyens pour que ledit signal ou lesdits signaux soient des signaux thermoélectriques.

Ces signaux ont une valeur en tension qui est représentative de la température de la zone de soudage. Il peut donc servir à piloter une unité qui peut commander alors, en temps réel, les différents paramètres de l'opération de soudage.

Par exemple, une telle unité peut commander l'arrêt du passage du courant de soudage lorsque, au vu du ou des signaux de mesure de température, une température de soudage prédéterminée est atteinte.

Elle peut également asservir le courant de soudage pour que l'évolution du signal de mesure corresponde à une fonction prédéterminée.

Dans la présente description, lorsqu'on désigne un couple de métaux comme présentant un pouvoir thermoélectrique, cela signifie que ce couple peut engendrer un signal de température mesurable, c'est-à-dire dont la valeur en tension est au minimum de l'ordre du millivolt, valeur qui en réalité dépend de l'électronique de détection.

Précisons que la température de la zone de soudage est de l'ordre de 1500° C, voire, dans certains cas, plus, et que le nombre de couples de matériaux qui, à cette température, répondent à la condition mentionnée ci-dessus est relativement important.

L'invention concerne également une application du procédé de mesure précédemment décrit au sertissage d'un fil électrique sur un segment conducteur de moteur électrique. En général, les segments de collecteur d'un moteur électrique sont montés à la périphérie d'un cylindre en matière isolante lui-même monté axialement sur l'arbre du moteur. Or, afin que l'opération de sertissage à chaud n'entraîne pas une déformation du cylindre, ce qui porterait atteinte à la précision dimensionnelle du collecteur et par conséquent au bon fonctionnement du moteur, on utilise des matériaux résistants à la haute température atteinte durant le sertissage. C'est ainsi qu'on a été amené à utiliser des matières plastiques chargées.

Ces matériaux sont néanmoins coûteux et peuvent, de plus, être polluants. Aussi, préfère-t-on utiliser d'autres matériaux moins onéreux et moins polluants et rechercher une solution au problème de la tenue en température du cylindre porteur des segments en passant par le contrôle de la température du segment et, en particulier, de la température à l'endroit du sertissage.

Un procédé selon l'invention, tel que défini à la revendication 11, est remarquable en ce qu'on utilise comme signal de mesure de température le signal thermoélectrique engendré entre l'électrode de sertissage et le segment avec lequel elle est en contact.

Ce signal de mesure a une valeur qui est proportionnelle à la température dans la zone de sertissage. Il est alors possible de contrôler la température de la zone afin de la réguler et qu'elle ne dépasse pas une température critique donnée.

De ce fait, il est également possible d'utiliser, pour le cylindre porteur des segments, un matériau de moins bonne tenue thermique et donc moins onéreux que ceux jusque là utilisés.

Selon un mode de réalisation préféré, l'électrode de sertissage est pourvue de moyens engendrant à l'interface avec le segment un signal thermoélectrique.

Ces moyens peuvent consister à prévoir une électrode dans un matériau tel qu'elle soit un des éléments d'un couple thermoélectrique dont l'autre élément est le segment à sertir.

Ils peuvent également consister en une pastille brasée à l'extrémité de ladite électrode et dans un matériau tel que ladite pastille soit un des élément d'un couple thermoélectrique dont l'autre élément est le segment à sertir.

Selon un autre mode de réalisation, l'extrémité libre de l'électrode comporte une pluralité de logements dans lesquels sont noyés des filaments dans un matériau tel que chacun desdits filaments forme un des élément d'un couple thermoélectrique dont l'autre élément est le segment à sertir.

Selon un autre mode de réalisation, ladite électrode est en cupronickel.

Les caractéristiques de l'invention mentionnées ci-dessus, ainsi que d'autres, apparaîtront plus clairement à la lecture de la description suivante d'exemples de réalisation de deux applications particulières, ladite description étant faite en relation avec les dessins joints, parmi lesquels:
les Figs. 1 à 3 sont respectivement des vues schématiques de machines à souder par point dans des premier, second et troisième modes de réalisation,
la Fig. 4 est une vue schématique d'une machine à souder par point comportant une unité de commande, cette vue illustrant un mode de fonctionnement possible de ladite unité de commande,
la Fig. 5 est une vue en coupe selon un plan radial d'un collecteur de moteur électrique,
la Fig. 6 est une vue illustrant la mise en oeuvre du procédé de sertissage selon l'invention, et
la Fig. 7 est une vue en coupe d'un mode de réalisation d'une électrode qui peut être utilisée pour la mise en oeuvre du procédé selon l'invention.

A la Fig. 1, on voit une première électrode 110 et une seconde électrode 120 d'une machine à souder par point. Les électrodes 110 et 120 sont représentées avec les extrémités respectivement en appui sur les faces externes de deux pièces à souder 130 et 140.

Les deux électrodes 110 et 120 sont respectivement reliées aux bornes d'une source de courant 150 destinée à délivrer le courant de soudage. Ce courant est ainsi prévu pour traverser chacune des pièces 130 et 140 dans une zone comprise entre les deux électrodes 110 et 120 afin de créer, dans cette zone, une fusion des pièces 130 et 140 qui assure leur soudage.

Selon un premier mode de réalisation de l'invention, l'électrode 110 est constituée dans un matériau tel qu'elle soit un des éléments d'un couple thermoélectrique dont le second élément est l'une des pièces à souder 130 ou 140 ou l'autre électrode 120.

Par exemple, si une des pièces à souder 130 ou 140 est en acier, on peut prévoir une électrode 110 en un alliage de cupronickel, l'autre électrode 120 pouvant être en cuivre. Le signal de température peut être prélevé entre l'électrode 110 en cupronickel et l'une ou l'autre pièce à souder 130 ou 140 ou, entre l'électrode 110 en cupronickel et l'électrode 120 en cuivre, comme le montrent les flèches A, B, C de la Fig. 1.

Notons que le signal de température peut également être prélevé aux bornes des deux pièces 130 et 140 (flèche D).

L'alliage de cupronickel de l'électrode 110 est tel que son pouvoir thermoélectrique avec une des pièces à souder 130 ou 140 soit suffisamment important pour être mesuré, ce qui implique qu'il présente une teneur en nickel relativement élevée. Mais, compte tenu de la forte intensité du courant de soudage et pour éviter des pertes en chaleur trop importantes, l'électrode 110 doit présenter une faible résistivité. La teneur en nickel ne peut donc pas être trop élevée. En conséquence, cet alliage de cupronickel contient avantageusement moins de 20% de nickel, voire moins de 10%. Des essais ont montré qu'une teneur de 2% donne de bons résultats, c'est-à-dire que les pertes par effet Joule sont faibles et que le signal de température présente une valeur encore suffisamment élevée pour pouvoir être mesurée.

L'invention ne se limite pas aux matériaux mentionnés ci-dessus qui le sont seulement à titre explicatif mais englobe également les matériaux qui remplissent les fonctions de ceux-ci.

La Fig. 2 représente un second mode de réalisation. Dans ce mode particulier, une électrode 110 est traversée longitudinalement par un conducteur 111 dont l'extrémité affleure à la surface de l'extrémité de l'électrode 110 si bien que, lorsque cette dernière est en appui sur la pièce 130, l'extrémité du conducteur 111 est en contact avec ladite pièce 130. Le conducteur 111 est constitué dans un matériau qui présente un pouvoir thermoélectrique mesurable avec une des pièces à souder 130 ou 140 ou avec l'électrode 120.

Le signal de mesure de la température de soudage est prélevé entre, d'une part, le conducteur 111 et, d'autre part, soit une des pièces à souder 130 ou 140 (flèches B et C), soit encore l'autre électrode 120 (flèche A). Il peut encore être prélevé entre le conducteur 111 et le corps de l'électrode 110 (flèche C'), celui-ci étant en contact électrique avec la pièce à souder 130.

Le matériau qui constitue le conducteur 111 est, par exemple, un alliage de cupronickel, comme du constantan.

La Fig. 3 montre un autre mode de réalisation où une pastille 112 de relativement faible épaisseur est fixée à l'extrémité de l'électrode 110. La pastille 112 est dans un matériau tel qu'elle présente, avec une des pièces à souder 130 ou 140, un pouvoir thermoélectrique mesurable. Le signal de mesure de la température de soudage est prélevé entre, d'une part, la pastille 112 et, d'autre part, une des pièces à souder 130 ou 140 (flèches B et C) ou l'autre électrode 120 (flèche A).

On notera que si la pastille 112 est de faible épaisseur, elle peut présenter une grande résistivité sans que les pertes par effet Joule soient élevées. De ce fait, il est possible de choisir un matériau présentant une fort pouvoir thermoélectrique comme, par exemple, un alliage de cupronickel à relativement fort pourcentage en nickel comme le constantan.

Les moyens mis en oeuvre représentés aux Figs. 2 et 3 sont en réalité des inserts prévus pour venir en contact avec une des pièces à souder (ici 130). On comprendra que d'autres formes d'insert ayant une fonction équivalente à ceux décrits entrent dans le cadre de la présente invention.

L'homme du métier ayant pris connaissance de l'enseignement contenu dans la présente description peut mettre en oeuvre un procédé selon l'invention où l'on contrôle les paramètres de soudage en fonction de plus d'un signal de température.

Par exemple deux signaux de température peuvent être obtenus en prévoyant des moyens, tels que ceux que l'on vient de décrire, pour que deux interfaces entre électrodes 110 et 120 et pièces à souder adjacentes ou entre pièces à souder entre elles présentent un pouvoir thermoélectrique. Un signal est prélevé aux bornes, d'une part, d'une électrode 110 et, d'autre part, de l'une des pièces à souder 130 alors que l'autre signal est prélevé aux bornes, d'une part, de l'autre électrode 120 et, d'autre part, de l'une ou l'autre pièces à souder 130 ou 140.

La Fig. 4 montre schématiquement une machine à souder par point avec ses deux électrodes 110 et 120 et une source de courant 150 dont les bornes sont respectivement reliées aux électrodes 110 et 120. Le signal de mesure de température S est délivré ici aux bornes des deux électrodes 110 et 120 mais on comprendra qu'il peut en être autrement comme cela a déjà été expliqué.

La machine représentée comporte encore une unité de commande 160. Celle-ci possède une entrée 161 sur laquelle est appliqué un signal d'horloge. Elle possède également deux entrées 162 et 163 auxquelles sont respectivement fournies le signal de mesure de température S.

L'unité 160 possède également une sortie 164 pour piloter la source de courant 150 et une autre sortie 165 pour contrôler d'autres paramètres de la machine.

Le fonctionnement de l'unité 160 peut être le suivant. Elle commande d'abord la source de courant 150 pour que celle-ci applique un courant d'intensité prédéterminée entre les deux électrodes 110 et 120. Par ailleurs, elle attribue une valeur à chacun des paramètres de la machine. Puis elle coupe la source de courant 150 et effectue alors la lecture du signal de mesure de température. Enfin, elle déduit de l'évaluation de la température ainsi faite les nouvelles valeurs des paramètres de la machine ainsi que la nouvelle valeur de l'intensité de courant qu'elle attribuera au cycle suivant.

La manière dont l'unité de commande 160 détermine les valeurs des paramètres de l'opération de soudage relève de la compétence de l'homme du métier et n'est donc pas décrite ici plus en détail.

La fonction essentielle de l'unité de commande 160 peut ainsi consister, après la phase de lecture du ou des signaux de température, a commander, si l'évaluation de la température n'a pas atteint une valeur seuil prédéterminée, le passage d'un courant de soudage d'une intensité prédéterminée dans les pièces à souder, c'est-à-dire, en d'autres termes, attribuer cette valeur d'intensité au courant de soudage, ou, si l'évaluation de la température de soudage a atteint cette valeur seuil, l'arrêt du passage du courant de soudage dans les pièces à souder, c'est-à-dire attribuer une valeur nulle à son intensité.

Une autre fonction de l'unité 160 est de réguler l'intensité du courant délivré par la source 150 de manière que l'évolution du signal de température S au cours du temps corresponde à une fonction, au sens mathématique du terme, prédéterminée.

On notera que le temps de réponse de l'unité 160 correspond à une période du signal d'horloge. Avec une fréquence d'horloge de 50 Hz, ils sont de vingt millisecondes, ce qui est suffisant pour une opération de soudage par point. Une précision plus importante peut être obtenue, par exemple, avec une fréquence d'horloge de 1000 Hz.

On comprendra que le fonctionnement de l'unité de commande 160 pourrait être sensiblement le même si plusieurs signaux de température étaient disponibles.

On va maintenant décrire une autre application du procédé de mesure de température selon l'invention, en particulier, dans le domaine du sertissage de segments d'un collecteur de moteur électrique.

Au préalable, on a représenté, à la Fig. 5, l'extrémité d'un rotor 201 d'un moteur électrique, extrémité prévue pour recevoir un collecteur 210 dudit moteur.

Sur l'arbre 201 d'un moteur, est montée solidaire une bague 202 en matière plastique destinée à recevoir les enroulements de l' induit du rotor (non représenté). Sur la bague 202, est monté solidaire un cylindre isolant 203, réalisé, par exemple, en matière plastique chargée.

A la périphérie du cylindre 203, sont montés solidaires du cylindre 203, et ce de manière connue de l'homme de métier, des segments de collecteur 204 constitués chacun d'une lame 204a dirigée axialement et prolongée, à une extrémité, d'une languette de raccordement coudée 204b. A l'intérieur du coude 205, passe un fil électrique 206 relié aux enroulements de l'induit du moteur. Il pourrait également être enroulé autour de la languette 204b du segment.

Le contact électrique et le montage mécanique du fil sont réalisés par une opération de sertissage à chaud. Au dessus de l'axe de la Fig. 1, on a représenté la languette telle qu'elle se présente avant sertissage à chaud du fil, c'est-à-dire au moment du montage des fils des enroulements de l'induit, tandis qu'au-dessous du même axe, elle est représentée après sertissage.

Notons que chaque segment 204 est avantageusement en un matériau contenant essentiellement du cuivre.

Le cylindre 203 présente un chanfrein 203a côté induit et chaque segment 204 repose sur un talon 203b.

La Fig. 6 montre schématiquement une machine pour réaliser une opération de sertissage selon l'invention. On voit une première électrode 211 qui repose avec contact électrique sur la lame 204a d'un segment 204. Une seconde électrode 212 susceptible de se déplacer verticalement est en appui sur l'extrémité libre de la languette 204b et est prévue pour exercer une force verticale F sur la languette 204b afin que celle-ci se replie vers la lame 204a tout en enserrant le fil électrique 206 à l'intérieur du coude 205.

La seconde électrode 212 est constituée d'un barre verticale métallique, par exemple en molybdène, à l'extrémité libre de laquelle on a monté, par exemple par brasage, une pastille 212a dans un alliage de cupronickel.

Par ce moyen, au contact, au moment du sertissage, entre la seconde électrode 212 dont l'extrémité 212a est en cupronickel et l'extrémité de la languette 204b en cuivre, on a créé un thermocouple engendrant une tension qui est proportionnelle à la température qui règne dans la zone de sertissage.

Selon le mode de réalisation représenté, la première électrode 211 est reliée électriquement à la masse alors que la seconde électrode 212 est reliée à la sortie 220s d'une unité de commande 220. Dans l'exemple de réalisation représenté, celle-ci est constituée d'un commutateur 221 dont le point commun 221a est relié à la sortie 220s de l'unité 220, dont un point commuté 221b est relié à une source de tension ou de courant 222 alors que l'autre point commuté 221c est relié à l'entrée d'une unité de contrôle 223. Celle-ci est reliée à la masse et comporte, d'une part, une sortie 223s reliée à une entrée de contrôle de la source 222 et, d'autre part, une sortie 223p reliée à l'entrée d'une unité de commande 224 de la force qu'exerce la seconde électrode 212 sur la languette 204b.

L'unité de contrôle 223 peut être, par exemple, du type à boucle d'asservissement, analogique ou numérique, avec ou sans microprocesseur.

Le commutateur 221 est commandé par une base de temps 225 pour qu'il commute alternativement d'une position à l'autre, et ce, par exemple, à une fréquence pouvant être comprise entre 1 et 1000 Hz.

Lorsque le commutateur 221 est commuté vers la source 222 pendant une phase dite d'alimentation, on applique, entre les deux électrodes 211 et 212, une tension créant le passage d'un courant suffisamment intense pour entraîner une élévation de température de la languette 204b et du fil 206. Cette élévation de température ainsi que la force qu'exerce la seconde électrode 212 sur la languette 204a permettent la réalisation du sertissage à chaud du fil 206 et, par conséquent, son maintien mécanique entre la languette 204b et la lame 204a et son contact électrique avec le segment 204.

Le fil 206 peut être recouvert d'une couche de vernis et, dans ce cas, l'élévation de température due au sertissage entraîne sa destruction à l'endroit du sertissage.

Lorsque le commutateur 221 est commuté vers l'unité 223 pendant une phase dite de mesure, la tension engendrée par le thermocouple créé entre la languette en cuivre 204b et la pastille en cupronickel 212a est reçue à l'entrée de l'unité de contrôle 223.

L'unité de contrôle 223 commande alors la source de tension 222 de manière qu'à la phase d'alimentation suivant une phase de mesure, la source 222 commande le chauffage de la languette 204b à une température désirée qui est fonction de la température mesurée pendant la phase de mesure.

Elle commande également l'unité 224 de manière à faire varier l'intensité de la force exercée par l'électrode 212 sur la languette 204b, notamment après affaissement de la languette 204b sur la lame 204a, ceci en fonction de la température mesurée pendant la phase de mesure. Selon la nature du sertissage, en particulier, des matériaux utilisés, de l'intensité du courant de sertissage, des masses des différents éléments intervenants, l'intensité de cette force croît ou décroît après la force initiale.

La description de la structure et celle du fonctionnement de l'unité de commande 220 sont données ici à titre d'exemple et on comprendra que ces structure et fonctionnement pourraient être différents sans sortir, pour cela, du cadre de l'invention.

A la Fig. 7, on a représenté une variante d'exécution de l'électrode 212 selon laquelle son extrémité comporte une pluralité de logements dans lesquels sont respectivement noyés des pastilles ou filaments 212b dans un alliage de cupronickel. Le fonctionnement est semblable au premier mode de réalisation.

## Revendications (Revendications pour l'(les) Etat(s) contractant(s) suivant(s): DE, ES, FR, GB, IT)

1. Procédé de contrôle de paramètres d'une opération de soudage effectuée par une machine à soudure par point, ladite machine comprenant deux électrodes mobiles (110, 120) respectivement reliées à une source de courant fournissant un courant de soudage et prévues pour appliquer, pendant l'opération de soudage de pièces (130, 140), une pression normale auxdites pièces (130, 140), ledit procédé consistant à contrôler lesdits paramètres de l'opération de soudage sur la base d'un signal électrique fonction de la température de la zone de soudage, ledit signal électrique étant prélevé, après avoir coupé la source de courant, aux bornes des électrodes (110 et 120), une électrode (110) étant dans un matériau tel qu'il soit un des éléments d'un couple thermoélectrique dont le second élément est le matériau de l'autre électrode (120).

2. Procédé selon la revendication 1, caractérisé en ce qu'une des électrodes (120) est en un alliage de cupronickel, et l'autre électrode (110) est en cuivre.

3. Procédé selon la revendication 2, caractérisé en ce que ladite électrode (120) est en un alliage de cupronickel, ledit alliage contenant moins de 20% de nickel.

4. Procédé de contrôle de paramètres d'une opération de soudage effectuée par une machine à soudure par point, ladite machine comprenant deux électrodes mobiles (110, 120) respectivement reliées à une source de courant fournissant un courant de soudage et prévues pour appliquer, pendant l'opération de soudage de pièces (130, 140), une pression normale auxdites pièces (130, 140), ledit procédé consistant à contrôler lesdits paramètres de l'opération de soudage sur la base d'un signal électrique fonction de la température de la zone de soudage, une des électrodes (110,ou 120) étant munie d'un insert (111, 112) venant au moment de l'opération de soudage en contact avec l'une des pièces à souder (130), ledit insert (111, 112) étant constitué dans un matériau tel qu'il soit un des éléments d'un couple thermoélectrique dont le second élément est le matériau de l'autre électrode (respectivement 120 ou 110), ledit signal étant délivré aux bornes, d'une part, de l'insert (111, 112) et, d'autre part, de l'autre électrode (120 ou 110).

5. Procédé selon la revendication 4, caractérisé en ce que ledit insert (111, 112) est constitué d'un conducteur (111) qui traverse longitudinalement ladite électrode (110, 120) et dont l'extrémité qui affleure la surface de l'extrémité de ladite électrode (110, 120) peut venir en contact avec la pièce à souder adjacente en même temps que ladite électrode (110, 120).

6. Procédé selon la revendication 4, caractérisé en ce que ledit insert (111, 112) consiste en une pastille (112) montée à l'extrémité de ladite électrode (110, 120).

7. Procédé selon une des revendications 4 à 6, caractérisé en ce que ledit insert (111, 112) est en un alliage de cupronickel.

8. Procédé de contrôle de paramètres d'une opération de sertissage d'un fil électrique (206) sur un segment conducteur (204), notamment d'un segment d'un collecteur de moteur électrique, ladite opération de sertissage consistant, d'une part, à exercer, au moyen d'une électrode de sertissage (212), une force sur l'extrémité de la languette (204b) dudit segment (204) afin qu'elle se replie sur la lame (204a) dudit segment (204) en enserrant ledit fil électrique (206), et, d'autre part, à faire passer un courant électrique entre ladite électrode de sertissage (212) et ledit segment (204) afin d'entraîner une élévation de la température de la zone à sertir, ledit procédé de contrôle consistant à contrôler les paramètres de sertissage, notamment le courant de sertissage, sur la base d'au moins un signal électrique fonction de la température de la zone de sertissage, caractérisé en ce que ledit ou lesdits signaux électriques sont directement prélevés, après avoir coupé la source de courant, aux bornes de ladite électrode de sertissage (212) et du segment (204) avec lequel elle est en contact, et en ce qu'on prévoit des moyens pour que ledit signal ou lesdits signaux soient des signaux thermoélectriques.

9. Procédé selon la revendication 8, caractérisé en ce que lesdits moyens consistent à pourvoir l'électrode de sertissage (212) de moyens engendrant à l'interface avec le segment (204) un signal thermoélectrique.

10. Procédé selon la revendication 9, caractérisé en ce que lesdits moyens consistent à prévoir une électrode (212) en un matériau tel qu'elle soit un des éléments d'un couple thermoélectrique dont l'autre élément est ledit segment (204) à sertir.

11. Procédé selon la revendication 9, caractérisé en ce que lesdits moyens consistent à prévoir une électrode (212) dont l'extrémité qui est en contact avec le segment au moment du sertissage est pourvue d'au moins une pastille (212a, 212b) dans un matériau tel qu'elle soit un des éléments d'un couple thermoélectrique dont l'autre élément est ledit segment (204) à sertir.

12. Procédé selon la revendication 9, caractérisé en ce que lesdits moyens consistent à prévoir une électrode (212) dont l'extrémité comporte une pluralité de logements dans lesquels sont noyés des filaments (212b) dans un matériau tel que chaque filament (212b) soit un des éléments d'un couple thermoélectrique dont l'autre élément est ledit segment (204) à sertir.

## Revendications (Revendications pour l'(les) Etat(s) contractant(s) suivant(s): CH, LI)

1. Procédé de mesure de la température de la zone de sertissage ou de soudage lors d'une opération de sertissage à chaud ou de soudage par point d'une ou plusieurs pièces, ladite opération consistant au passage d'un courant électrique à travers ladite ou lesdites pièces (130, 140) dans ladite zone, ledit courant étant fourni au moyen d'au moins une électrode (110 ou 120) en contact électrique avec une desdites pièces (130, 140), caractérisé en ce qu'on utilise comme signal de mesure, après avoir interrompu le passage du courant électrique, au moins l'un des signaux thermoélectriques respectivement engendrés entre l'une ou l'autre pièce (130, 140) et l'électrode (110 ou 120) avec laquelle elles sont en contact, et/ou entre les pièces elles-mêmes (130, 140).

2. Procédé selon la revendication 1, caractérisé en ce qu'on utilise au moins une électrode (110, 120) pourvue de moyens engendrant à l'interface avec la pièce (130, 140) avec laquelle elle est en contact un signal thermoélectrique.

3. Procédé selon la revendication 2, caractérisé en ce que lesdits moyens consistent à prévoir une électrode (110 ou 120) dans un matériau tel qu'elle soit un des éléments d'un couple thermoélectrique dont l'autre élément est l'une desdites pièces (130, 140) à sertir ou à souder ou l'autre électrode (respectivement 120 ou 110).

4. Procédé selon la revendication 2, caractérisé en ce que lesdites moyens consistent en une pastille (112) soudée à l'extrémité de ladite électrode (110 ou 120) et dans un alliage tel que ladite pastille (112) soit un des éléments d'un couple thermoélectrique dont l'autre élément est l'une desdites pièces (130, 140) à sertir ou à souder ou l'autre électrode (respectivement 120 ou 110).

5. Procédé selon la revendication 2, caractérisé en ce que lesdits moyens consistent en une pluralité de filaments noyés dans des logements prévus à l'extrémité de ladite électrode (110 ou 120), lesdits filaments étant dans un alliage tel qu'ils soient un des éléments d'un couple thermoélectrique dont l'autre élément est l'une desdites pièces (130, 140) à sertir ou à souder ou l'autre électrode (respectivement 120 ou 110).

6. Procédé de contrôle de paramètres d'une opération de soudage effectuée par une machine à soudure par point, ladite machine comprenant deux électrodes (110, 120) mobiles respectivement reliées à une source de courant (150) fournissant un courant de soudage et prévues pour appliquer, pendant l'opération de soudage de pièces (130, 140), une pression normale auxdites pièces (130, 140), ledit procédé consistant à contrôler lesdits paramètres sur la base d'au moins un signal électrique fonction de la température de la zone de soudage, caractérisé en ce que ledit ou lesdits signaux électriques sont prélevés, après avoir coupé la source de courant (150), aux bornes, d'une part, d'une électrode (110 ou 120) et, d'autre part, de l'une des pièces à souder (130, 140) ou de l'autre électrode (respectivement 120 ou 110), et en ce qu'on prévoit des moyens pour que ledit signal ou lesdits signaux soient des signaux thermoélectriques.

7. Procédé selon la revendication 6, caractérisé en ce que lesdits moyens consistent à prévoir une électrode (110) dans un matériau tel qu'il soit un des éléments d'un couple thermoélectrique dont le second élément est le matériau de l'une des pièces à souder (130) ou de l'autre électrode (120).

8. Procédé selon la revendication 7, caractérisé en ce que lesdits moyens consistent à munir une électrode (110) d'un insert (111, 112) venant au moment de l'opération de soudage en contact avec l'une des pièces à souder (130), ledit insert (111, 112) étant constitué dans un matériau tel qu'il soit un des éléments d'un couple thermoélectrique dont le second élément est le matériau de l'une des pièces à souder (130) ou de l'autre électrode (120), ledit signal étant délivré aux bornes, d'une part, de l'insert (111, 112) et, d'autre part, de l'une des pièces à souder (130, 140) ou de l'une ou l'autre électrode (110, 120).

9. Procédé selon la revendication 8, caractérisé en ce que ledit insert est constitué d'un conducteur (111) qui traverse longitudinalement ladite électrode (110, 120) et dont l'extrémité qui affleure la surface de l'extrémité de ladite électrode (110, 120) peut venir en contact avec la pièce à souder adjacente en même temps que ladite électrode (110, 120).

10. Procédé selon la revendication 8, caractérisé en ce que ledit insert consiste en une pastille (112) montée à l'extrémité de ladite électrode.

11. Procédé de contrôle de paramètres d'une opération de sertissage d'un fil électrique (206) sur un segment conducteur (204), notamment d'un segment d'un collecteur de moteur électrique, ladite opération de sertissage consistant, d'une part, à exercer, au moyen d'une électrode de sertissage (212), une force sur l'extrémité de la languette (204b) dudit segment (204) afin qu'elle se replie sur la lame (204a) dudit segment (204) en enserrant ledit fil électrique (206), et, d'autre part, à faire passer un courant électrique entre ladite électrode de sertissage (212) et ledit segment (204) afin d'entraîner une élévation de la température de la zone à sertir, ledit procédé de contrôle consistant à contrôler les paramètres de sertissage, notamment le courant de sertissage, sur la base d'au moins un signal électrique fonction de la température de la zone de sertissage, caractérisé en ce que ledit ou lesdits signaux électriques sont directement prélevés, après avoir interrompu le passage du courant électrique, aux bornes de ladite électrode de sertissage (212) et du segment (204) avec lequel elle est en contact, et en ce qu'on prévoit des moyens pour que ledit signal ou lesdits signaux soient des signaux thermoélectriques.

12. Procédé selon la revendication 11, caractérisé en ce que lesdits moyens consistent à pourvoir l'électrode sertissage (212) de moyens engendrant à l'interface avec le segment (204) un signal thermoélectrique.

13. Procédé selon la revendication 12, caractérisé en ce que lesdits moyens consistent à prévoir une électrode (212) en un matériau tel qu'elle soit un des éléments d'un couple thermoélectrique dont l'autre élément est ledit segment (204) à sertir.

14. Procédé selon la revendication 12, caractérisé en ce que lesdits moyens consistent à prévoir une électrode (212) dont l'extrémité qui est en contact avec le segment au moment du sertissage est pourvue d'au moins une pastille (212a, 212b) dans un matériau tel qu'elle soit un des éléments d'un couple thermoélectrique dont l'autre élément est ledit segment (204) à sertir.

15. Procédé selon la revendication 12, caractérisé en ce que lesdits moyens consistent à prévoir une électrode (212) dont l'extrémité comporte une pluralité de logements dans lesquels sont noyés des filaments (212b) dans un matériau tel que chaque filament (212b) soit un des éléments d'un couple thermoélectrique dont l'autre élément est ledit segment (204) à sertir.

## Claims (Claims for the following Contracting State(s): DE, ES, FR, GB, IT)

1. Method of checking parameters of a welding operation effected by a spot welding machine, the said machine comprising two movable electrodes (110,120) respectively connected to a current source supplying a welding current and provided for applying during the welding operation of parts (130,140), a pressure perpendicular to the said parts (130,140), the said method consisting of checking the said parameters of the welding operation on the basis of an electric signal a function of the temperature of the welding zone, the said electric signal being taken, after having cut off the current source, at the terminals of the electrodes (110,120), one electrode (110) being made of a material such that it is one of the elements of a thermo-electric couple the second element of which is the material of the other electrode (120).

2. Method according to claim 1, characterised in that one of the electrode (120) is made of a cupro-nickel alloy and the other electrode (110) is made of copper.

3. Method according to claim 1, characterised in that the said electrode (110) is made of a cupro-nickel allioy, the said alloy containing less than 20% nickel.

4. Method of checking parameters of a welding operation effected by a spot welding machine the said machine comprising two movable electrodes (110,120) respectively connected to a current source supplying a welding current and provided to apply during the welding operation of parts (130,140) a pressure perpendicular to the said parts (130,140) the said method consisting of checking the said parameters of the welding operation on the basis of an electric signal a function of the temperature of the welding zone, one of the electrodes (110 or 120) being provided with an insert (111,112) coming at the moment of the welding operation in contact with one of the parts to be welded (130), the said insert (111,112) being made of a material such that it is one of the elements of a thermo-electric couple the second element of which is the material of the other electrode (respectively 120 or 110), the said signal being supplied to the terminals, on the one hand, of the insert (111,112) and on the other hand, of the other electrode (120 or 110).

5. Method according to claim 4, characterised in that the said insert (111,112) is constituted by a conductor (111) which passes longitudinally through the said electrode (110,120) and the end of which is flush with the surface of the end of the said electrode (110,120) can come in contact with the adjacent part to be welded at the same time as the said electrode (110,120).

6. Method according to claim 4, characterised in that the said insert (111,112) consists of a cap (112) mounted at the end of the said electrode (110,120).

7. Method according to one of the claims 4 to 6, characterised on that the said insert (111,112) is made of a cupro-nickel alloy.

8. Method of checking parameters of a setting operation of an electric wire (206) on a conductor segment (204) in particular a segment of an electric motor collector, the said setting operation consisting of, on the one hand, exercising, by means of a setting electrode (212) a force on the end of the tongue (204b) of the said segment (204) so that it is bent onto the thin plate (204a) of the said segment (204) gripping the said electric wire (206) and, on the other hand, causing an electric current to pass between the said setting electrode (212) and the said segment (204) so as to bring about a raising of the temperature of the zone to be set, the said method of checking consisting of checking the setting parameters, in particular the setting current on the basis of at least one electric signal a function of the temperature of the setting zone, characterised in that the said electric signal or signals are directly taken after having cut off the current source at the terminals of the said setting electrode (212) and of the segment (204) with which it is in contact an in that means are provided so that the said signal or the said signals are thermo-electric signals.

9. Method according to claim 8, characterised in that the said means consist on providing the setting electrode (212) with means developing at the interface with the segment (204) a thermo-electric signal.

10. Method according to claim 9, characterised in that the said means consists in providing an electrode (212) made of a material such that it is one of the elements of a thermoelectric couple the other element of which is the said segment (204) to be set.

11. Method according to claim 9, characterised in that the said means consists in providing an electrode (212) the end of which is in contact with the segment at the moment of the setting is provided with at least one cap (212a,212b) made of a material such that it is one of the elements of a thermoelectric couple the other element of which is the said segment (204) to be set.

12. Method according to claim 9, characterised in that the said means consist in providing an electrode (212) the end of which has a plurality of recesses into which are countersunk filaments (212b) made of a material such that each filament (212b) is one of the elements of a thermo-electric couple the other element of which is the said segment (204) to be set.

## Claims (Claims for the following Contracting State(s): CH, LI)

1. Method of measuring the temperature of the crimping or welding zone in the process of hot-crimping or spot-welding of one or several parts, the said process consisting in passing an electric current through the said part or parts (130, 140) in the said zone, the said current being supplied by means of one or more electrodes (110 or 120) in electrical contact with the said parts (130, 140), characterized in that, following interruption of the passage of the electric current, the measurement signal used is constituted by one or more of the thermoelectric signals generated, respectively, between either of the parts (130, 140) and the electrode (110 or 120) with which they are in contact and/or between the parts themselves (130, 140).

2. Method according to Claim 1, characterized in that there is used one or more electrodes (110, 120) possessing means for generating a thermoelectric signal at the interface with the part (130, 140) with which it is in contact.

3. Method according to Claim 2, characterized in that the said means consist in providing an electrode (110 or 120) of such a material that it constitutes one of the elements of a thermocouple in which the other element is one of the said parts (130, 140) to be crimped or welded or the other electrode (120 or 110 respectively).

4. Method according to Claim 2, characterized in that the said means consists of a pad (112) welded to the end of the said electrode (110 or 120) and of such an alloy that the said pad (112) constitutes one of the elements of a thermocouple in which the other element is one of the said parts (130, 140) to be crimped or welded or the other electrode (120 or 110 respectively).

5. Method according to Claim 2, characterized in that the said means consist of a plurality of filaments embedded in slots provided on the end of the said electrode (110 or 120), the said filaments being of such an alloy that they constitute one of the elements of the thermocouple in which the other elements is one of the said parts (130, 140) to be crimped or welded or the other electrode (120 or 110) respectively).

6. Method of controlling parameters of a welding process performed by a spot-welding machine, the said machine comprising two mobile electrodes (110, 120), each connected to a current source (150), supplying a welding current and equipped so as to be capable of applying pressure perpendicularly to the said parts (130, 140) during the process of welding the parts (130, 140), the said method consisting in controlling the said parameters on the basis of one or more electric signals as a function of the temperature of the welding zone, characterized in that the said electric signal or signals are tapped, following interruption of the current source (150), at the terminals of both one electrode (110 or 120) and of one of the parts to be welded (130, 140) or of the other electrode (120 or 110 respectively), and in that there are provided means such that the said signal or signals are thermoelectric signals.

7. Method according to Claim 6, characterized in that the said means consist in providing an electrode (110) of such a material that it constitutes of the elements of a thermocouple in which the second element is the material of one of the parts (130) to be welded or of the other electrode (120).

8. Method according to Claim 7, characterized in that the said means consist in equipping an electrode (110) with an insert (111, 112) which, during the welding process, comes into contact with one of the parts to be welded (130), the said insert (111, 112) being composed of such a material that it constitutes one of the elements of a thermocouple in which the second element is the material of one of the parts (130) to be welded or of the other electrode (120), the said signal being delivered to the terminals of both the insert (111, 112) and of one of the parts (130, 140) to be welded or of either of the electrode (110, 120)

9. Method according to Claim 8, characterized in that the said insert is comprised of a conductor (111) which passes longitudinally through the said electrode (110, 120), its end, which is flush with the end face of the said electrode (110, 120), being capable of coming into contact with the adjacent part to be welded at the same time as the said electrode (110, 120).

10. Method according to Claim 8, characterized in that the said insert consists of a pad (112) mounted on the end of the said electrode.

11. Method of controlling parameters of a process of crimping an electric wire (206) on to a conductor segment (204), particularly a segment of a collector of an electric motor, the said crimping process consisting both in applying a force to the end of the tongue (204b) of the said segment (204), by means of a crimping electrode (212) so that the tongue is folded back on to the blade (204a) of the said segment (204), gripping the said electric wire (206), and in passing an electric current between the said crimping electrode (212) and the said segment (204) for the purpose of raising the temperature of the zone to be crimped, the said control method consisting in controlling the crimping parameters, particularly the crimping current, on the basis of one or more electric signals as a function of the temperature of the crimping zone, characterized in that the said electric signal or signals are tapped directly, following interruption of the passage of the electric current, at the terminals of the said crimping electrode (212) and of the segment (204) with which it is in contact, and in that there are provided means such that the said signal or signals are thermoelectric signals.

12. Method according to Claim 11, characterized in that the said means consist in providing the crimping electrode (212) with means for generating a thermoelectric signal at the interface with the segment (204).

13. Method according to Claim 12, characterized in that the said means consist in providing an electrode (212) of such a material that it constitutes one of the elements of a thermocouple in which the other element is the said segment (204) to be crimped.

14. Method according to Claim 12, characterized in that the said means consist in providing an electrode (212), the end of which is in contact with the segment during crimping and which is equipped with one or more pads (212a, 212b) of such a material that it constitutes one of the elements of a thermocouple in which the other element is the said segment (204) to be crimped.

15. Method according to Claim 12, characterized in that the said means consist in providing an electrode (212), the end of which includes a multiplicity of slots within which there are embedded filaments (212b) of such a material that each filament (212b) constitutes one of the elements of a thermocouple in which the other elements is the said segment (204) to be crimped.

## Patentansprüche (Patentansprüche für folgende(n) Vertragsstaat(en): DE, ES, FR, GB, IT)

1. Verfahren zur Steuerung der Parameter eines Schweißvorgangs durch eine Punktschweißmaschine, wobei die Maschine zwei bewegbare Elektroden (110, 120) enthält, die jeweils mit einer einen Schweißstrom liefernden Stromquelle verbunden sind und während des Schweißvorgangs von Teilen (130, 140) einen Druck senkrecht auf die Teile (130, 140) ausüben, und wobei das Verfahren darin besteht, die Parameter des Schweißvorgangs aufgrund eines elektrischen Signals zu steuern, das eine Funktion der Temperatur der Schweißzone ist, und wobei das elektrische Signal nach dem Abschalten der Stromquelle von den Klemmen der Elektroden (110 und 120) abgetrennt wird und eine Elektrode (110) aus einem solchen Material besteht, daß sie eines der Elemente eines thermoelektrischen Paares bildet, dessen zweites Element das Material der anderen Elektrode (120) ist.

2. Verfahren nach Anspruch 1, **dadurch gekennzeichnet**, daß eine der Elektroden (120) eine Kupfer/Nickel-Legierung ist und die andere Elektrode (110) aus Kupfer besteht.

3. Verfahren nach Anspruch 2, **dadurch gekennzeichnet**, daß die genannte Elektrode (120) eine Kupfer/Nickel-Legierung ist und die Legierung weniger als 20 % Nickel enthält.

4. Verfahren zur Steuerung der Parameter eines Schweißvorgangs durch eine Punktschweißmaschine, wobei die Maschine zwei bewegbare Elektroden (110, 120) enthält, die jeweils mit einer einen Schweißstrom liefernden Stromquelle verbunden sind und während des Schweißvorgangs von Teilen (130, 140) einen Druck senkrecht auf die Teile (130, 140) ausüben, und wobei das Verfahren darin besteht, die Parameter des Schweißvorgangs aufgrund eines elektrischen Signals zu steuern, das eine Funktion der Temperatur der Schweißzone ist, wobei eine der Elektroden (110 oder 120) mit einem Einsatz (111, 112) versehen ist, der im Augenblick des Schweißvorgangs mit einem der zu verschweißenden Teile (130) in Kontakt gelangt und der Einsatz (111, 112) aus einem solchen Material besteht, daß er eines der Elemente eines thermoelektrischen Paares bildet, dessen zweites Element das Material der anderen Elektrode (120 bzw. 110) ist, und das Signal an den Klemmen einerseits von dem Einsatz (111, 112) und andererseits von der anderen Elektrode (120 oder 110) geliefert wird.

5. Verfahren nach Anspruch 4, **dadurch gekennzeichnet**, daß der Einsatz (111, 112) durch einen Leiter (111) gebildet ist, der die Elektrode (110, 120) in Längsrichtung durchdringt und dessen Ende, das in der gleichen Ebene liegt wie die Oberfläche am Ende der Elektrode (110, 120), mit dem anliegenden zu verschweißenden Teil gleichzeitig wie die Elektrode (110, 120) in Kontakt gelangen kann.

6. Verfahren nach Anspruch 4, **dadurch gekennzeichnet**, daß der Einsatz (111, 112) aus einem Plättchen (112) besteht, das am Ende der Elektrode (110, 120) montiert ist.

7. Verfahren nach einem der Ansprüche 4 - 6, **dadurch gekennzeichnet**, daß der Einsatz (111, 112) eine Kupfer/Nickel-Legierung ist.

8. Verfahren zur Steuerung von Parametern eines Krimpvorgangs eines elektrischen Drahtes (206) auf einem leitenden Segment (204), insbesondere einem Segment eines Kollektors eines Elektromotors, wobei der Krimpvorgang darin besteht, einerseits mittels einer Krimpelelektrode (212) eine Kraft auf das Ende der Zunge (204b) des Segmentes (204) auszuüben, damit sie sich auf die Platte (204a) des Segmentes (204) anlegt und dadurch den elektrischen Draht (206) einschließt und andererseits einen elektrischen Stromfluß zwischen der Krimpelelektrode (212) und dem Segment (204) bildet, um dadurch eine Erhöhung der Temperatur in der Krimp-Zone zu erzeugen, und wobei das Steuerverfahren darin besteht, die Krimp-Parameter, insbesondere den Krimpstrom, auf der Basis wenigstens eines elektrischen Signals als Funktion der Temperatur der Krimp-Zone zu steuern, **dadurch gekennzeichnet**, daß das elektrische Signal oder die elektrischen Signale nach dem Abschalten der Stromquelle von den Klemmen der Krimp-Elektrode (212) und von dem Segment (204), mit dem sie in Kontakt steht, getrennt werden, indem Mittel vorgesehen sind, damit das Signal oder die Signale thermoelektrische Signale sind.

9. Verfahren nach Anspruch 8, **dadurch gekennzeichnet**, daß die Mittel darin bestehen, daß sie die Krimp-Elektrode (212) mit Mitteln versehen, die zusammen mit dem Segment (204) ein thermoelektrisches Signal erzeugen.

10. Verfahren nach Anspruch 9, **dadurch gekennzeichnet**, daß die Mittel darin bestehen, eine Elektrode (212) aus einem solchen Material vorzusehen, daß sie eines der Elemente eines thermoelektrischen Paares bildet, dessen anderes Element das genannte, zu krimpende Segment (204) ist.

11. Verfahren nach Anspruch 9, **dadurch gekennzeichnet**, daß die genannten Mittel darin bestehen, eine Elektrode (212) vorzusehen, deren Ende, das im Augenblick des Krimpvorgangs in Kontakt mit dem Segment steht, mit wenigstens einem Plättchen (212a, 212b) aus einem solchen Material versehen ist, daß es eines der Elemente eines thermoelektrischen Paares bildet, dessen anderes Element das genannte zu krimpende Segment (204) ist.

12. Verfahren nach Anspruch 9, **dadurch gekennzeichnet**, daß die genannten Mittel darin bestehen, eine Elektrode (212) vorzusehen, deren Ende eine Vielzahl von Aufnahmen aufweist, in denen Drähte (212b) aus einem solchen Material eingebettet sind, daß jeder Draht (212b) eines der Elemente eines thermoelektrischen Paares bildet, dessen anderes Element das genannte zu krimpende Segment (204) ist.

## Patentansprüche (Patentansprüche für folgende(n) Vertragsstaat(en): CH, LI)

1. Verfahren zur Messung der Temperatur der Krimp- oder Schweißzone bei einem Wärme-Krimp- oder Punktschweißvorgang eines oder mehrerer Teile, wobei der Vorgang in einem elektrischen Stromfluß durch das Teil oder die Teile (130, 140) in der genannten Zone besteht und der Strom durch wenigstens eine Elektrode (110 oder 120) erzeugt wird, die in elektrischem Kontakt mit einem der Teile (130, 140) steht, **dadurch gekennzeichnet**, daß als Meßgröße, nachdem der Fluß des elektrischen Stromes unterbrochen worden ist, wenigstens eines der thermoelektrischen Signale verwendet wird, die jeweils zwischen dem einen oder anderen Teil (130, 140) und der Elektrode (110 oder 120), mit der sie in Kontakt stehen, und/oder zwischen den Teilen (130, 140) selbst erzeugt werden.

2. Verfahren nach Anspruch 1, **dadurch gekennzeichnet**, daß wenigstens eine Elektrode (110, 120) verwendet wird, die mit Mitteln versehen ist, die an der Berührungsfläche mit dem Teil (130, 140), mit dem sie in Kontakt steht, ein thermoelektrisches Signal erzeugen.

3. Verfahren nach Anspruch 2, **dadurch gekennzeichnet**, daß die Mittel darin bestehen, daß eine Elektrode (110 oder 120) aus einem derartigen Material vorgesehen wird, daß sie eines der Elemente eines thermoelektrischen Paares bildet, dessen anderes Element eines der genannten zu krimpenden oder zu verschweißenden Teile (130, 140) oder die andere Elektrode (120 bzw. 110) ist.

4. Verfahren nach Anspruch 2, **dadurch gekennzeichnet**, daß die Mittel in einem Plättchen (112) bestehen, das mit dem Ende der Elektrode (110 oder 120) verschweißt und eine solche Legierung ist, daß das Plättchen (112) eines der Elemente eines thermoelektrischen Paares ist, dessen anderes Element eines der zu krimpenden oder zu verschweißenden Teile (130, 140) oder die andere Elektrode (120 bzw. 110) ist.

5. Verfahren nach Anspruch 2, **dadurch gekennzeichnet**, daß die Mittel in einer Vielzahl von Drähten bestehen, die in Aufnahmen am Ende der Elektrode (110 oder 120) versenkt sind, und die Drähte aus einer solchen Legierung bestehen, daß sie eines der Elemente eines thermoelektrischen Paares bilden, dessen anderes Element eines der zu krimpenden oder zu verschweißenden Teile (130, 140) oder die andere Elektrode (120 bzw. 110) ist.

6. Verfahren zur Steuerung der Parameter eines Schweißvorgangs durch eine Punktschweißmaschine, wobei die Maschine zwei bewegbare Elektroden (110, 120) enthält, die jeweils mit einer einen Schweißstrom liefernden Stromquelle (150) verbunden sind und während des Schweißvorgangs von Teilen (130, 140) einen Druck senkrecht auf die Teile (130, 140) ausüben, und wobei das Verfahren darin besteht, die Parameter des Schweißvorgangs aufgrund eines elektrischen Signals zu steuern, das eine Funktion der Temperatur der Schweißzone ist, **dadurch gekennzeichnet**, daß das elektrische Signal oder die elektrischen Signale, nachdem die Stromquelle (150) abgeschaltet ist, von den Klemmen einerseits einer Elektrode (110 oder 120) und andererseits eines der zu verschweißenden Teile (130, 140) oder der anderen Elektrode (120 bzw. 110) abgetrennt werden, und daß Mittel vorgesehen werden, damit das Signal oder die Signale thermoelektrische Signale sind.

7. Verfahren nach Anspruch 6, **dadurch gekennzeichnet**, daß die Mittel darin bestehen, daß eine Elektrode (110) aus einem solchen Material vorgesehen wird, daß sie eines der Elemente eines thermoelektrischen Paares bildet, dessen zweites Element das Material eines der zu verschweißenden Teile (130) oder die andere Elektrode (120) ist.

8. Verfahren nach Anspruch 7, **dadurch gekennzeichnet**, daß die Mittel darin bestehen, eine Elektrode (110) mit einem Einsatz (111, 112) zu versehen, der im Augenblick des Schweißvorganges in Kontakt mit einem der zu verschweißenden Teile (130) gelangt, und daß der Einsatz (111, 112) aus einem solchen Material besteht, daß er eines der Elemente eines thermoelektrischen Paares bildet, dessen zweites Element das Material des einen der zu verschweißenden Teile (130) oder die andere Elektrode (120) ist, und daß das Signal an den Klemmen einerseits des Einsatzes (111, 112) und andererseits des einen der zu verschweißenden Teile (130, 140) oder der einen oder der anderen Elektrode (110, 120) abgenommen wird.

9. Verfahren nach Anspruch 8, **dadurch gekennzeichnet**, daß der Einsatz durch einen Leiter (111) gebildet wird, der die Elektrode (110, 120) in Längsrichtung durchdringt und dessen Ende, das mit der End-Oberfläche der Elektrode (110, 120) in einer Ebene liegt, mit dem anliegenden, zu verschweißenden Teil gleichzeitig mit der Elektrode (110, 120) in Kontakt gelangen kann.

10. Verfahren nach Anspruch 8, **dadurch gekennzeichnet**, daß der Einsatz aus einem Plättchen (112) besteht, das am Ende der Elektrode montiert ist.

11. Verfahren zur Steuerung von Paramtern eines Krimpvorganges eines elektrischen Drahtes (206) auf einem leitenden Segment (204), insbesondere einem Segment eines Kollektors eines Elektromotors, wobei der Krimpvorgang darin besteht, einerseits mittels einer Krimpelektrode (212) eine Kraft auf das Ende der Zunge (204b) des Segmentes auszuüben, damit sie sich auf die Platte (204a) des Segmentes (204) anlegt und dadurch den elektrischen Draht (206) einschließt, und andererseits einen elektrischen Stromfluß zwischen der Krimpelektrode (212) und dem Segment (204) bildet, um dadurch eine Erhöhung der Temperatur in der Einfaßzone zu erzeugen, und wobei das Steuerverfahren darin besteht, die Krimp-Parameter, insbesondere den Krimpstrom, auf der Basis wenigstens eines elektrischen Signals als Funktion der Temperatur der Krimp-Zone zu steuern, **dadurch gekennzeichnet**, daß das elektrische Signal oder die elektrischen Signale nach dem Unterbrechen des elektrischen Stromflusses von den Klemmen der Krimp-Elektrode (212) und von dem Segment (204), mit dem sie in Kontakt steht, direkt getrennt werden, indem Mittel vorgesehen sind, damit das Signal oder die Signale thermoelektrische Signale sind.

12. Verfahren nach Anspruch 11, **dadurch gekennzeichnet**, daß die Mittel darin bestehen, die Krimp-Elektrode (212) mit Mitteln zu versehen, die an der Berührungsfläche mit dem Segment (204) ein thermoelektrisches Signal erzeugen.

13. Verfahren nach Anspruch 12, **dadurch gekennzeichnet**, daß die Mittel darin bestehen, eine Elektrode (212) aus einem solchen Material vorzusehen, daß sie eines der Elemente eines thermoelektrischen Paares bildet, dessen anderes Element das zu krimpende Segment (204) ist.

14. Verfahren nach Anspruch 12, **dadurch gekennzeichnet**, daß die Mittel darin bestehen, eine Elektrode (212) vorzusehen, deren Ende, das im Augenblick des Krimpens mit dem Segment in Kontakt steht, mit wenigstens einem Plättchen (212a, 212b) aus einem solchen Material versehen ist, daß es eines der Elemente eines thermoelektrischen Paares bildet, dessen anderes Element das zu krimpende Segment (204) ist.

15. Verfahren nach Anspruch 12, **dadurch gekennzeichnet**, daß die Mittel darin bestehen, eine Elektrode (212) vorzusehen, deren Ende eine Vielzahl von Aufnahmen bildet, in denen Drähte (212b) aus einem solchen Material versenkt sind, daß jeder Draht (212b) eines der Elemente eines themoelektrischen Paares bildet, dessen anderes Element das zu krimpende Segment (204) ist.
